# EUROPEAN PATENT SPECIFICATION

(11) **EP 2 007 495 B1**
(45) Date of publication and mention of the grant of the patent: **22.10.2014**
(21) Application number: 07732225.3
(22) Date of filing: 30.03.2007
(51) Int. Cl.: B01D 35/10

(54) **FLUID FILTER**
FLUIDFILTER
FILTRE POUR FLUIDE

(30) Priority: 31.03.2006 GB 0606584
(43) Date of publication of application: 31.12.2008
(73) Proprietor: Water Maiden Holdings Limited, Preston Lancashire PR1 3HP (GB)
(72) Inventor: JENSEN, Soren, Ingemann, London EC4Y 0DF (GB); McINTYRE, Philip, Preston PR1 3HP (GB)
(74) Representative: Korenberg, Alexander Tal
(86) International application number: PCT/GB2007/001171
(87) International publication number: WO 2007/113512

(56) References cited:
- EP-A1- 0 344 633
- JP-A- 55 165 115
- US-A- 5 690 823

## Description

The present invention relates to a fluid filter, and particularly but not exclusively to a high pressure and throughput filter for removing solid material from a liquid such as water.

A known filter which makes use of fibres to trap material entrained within the medium is disclosed in EP-A-0280052. The device of EP-A-0280052 is shown in Figures 1 and 1a. The filter 100 comprises a filter housing 101 with an inlet end 102 and an outlet end 103. Extending longitudinally of the housing are a plurality of parallel fibres, held in place by a support 106. Surrounding the fibres is a flexible waterproof membrane 104.

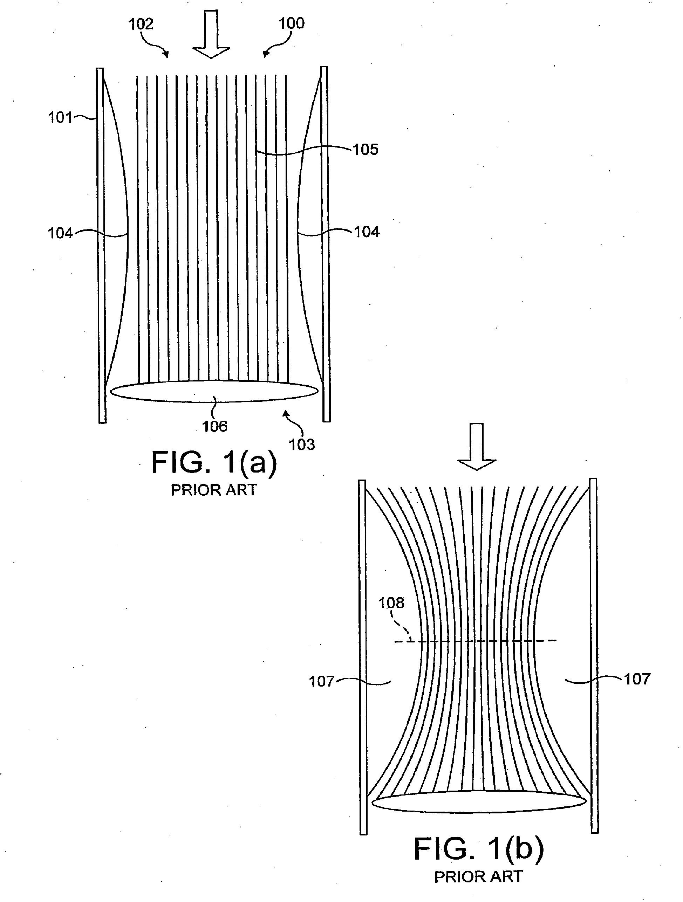

During filtration, the membrane 104 is pressurised as shown at 107 in Figure 1a using compressed air or the like, thereby compressing the fibres towards an internal pinch point 108. The material to be filtered is forced through the filter in the direction shown by the arrow. The filter may be flushed and cleaned by releasing the pressure within the membrane and back-flushing in the opposite direction to the normal flow of filtration.

In one embodiment, EP-A-0280052 discloses a distensible balloon with fibres surrounding it, so that as the balloon is distended using compressed air, the fibres get pushed out against the internal circumference of the filter housing.

This type of filter can work well on a relatively small scale. However, the inflation of the balloon/membrane requires a substantial amount of space and also requires a source of compressed air. The balloon/membrane needs to be long enough to create the graduated filter and this requires fibre length to be long. Thus the component parts of the filter can result in significant expense. Furthermore, this type of filter can be difficult to apply on a larger scale in which larger volumes of liquid need to be filtered, as the balloon or flexible membrane must be accordingly larger, stronger and will require more compressed air in order to inflate it. The resulting filter can thus be large, awkward and expensive.

EP 0344633 concerns a filter in which fibre bundles are compressed to 80-30% of their height during use of the filter.

US-A-5690823 discloses a filtration medium using solid fibres that are compressed at a certain point by a retainer member.

JP-A-55165115 discloses a fluid filter and a method of operating a filter as set out in the preambles of the independent claims.

According to the present invention a fluid filter and a method of operating a filter is characterised by those features set out in the characterising portions of the independent claims

An advantage of the filter of Claim 1 is that no extra means of compression of the plurality of fibres, such as a balloon or flexible membrane powered by compressed air, is required in order to create an effective filter matrix. This in turn means that the filter can be made smaller or larger as required by a specific application without having to redesign the balloon/membrane and with no need for compressed air for inflation of the balloon/membrane. The filter of the present invention can be housed in a smaller casing than could the prior art filter discussed above for any given requirement of filtration. The filter of the present invention is also cheap to manufacture and easy to install due to the relatively few components.

The fibres are elastic hollow fibres that are sealed at the outlet end thereof and open at the inlet end thereof.

The filter may comprise a means of pressurising the fluid to be filtered. In an embodiment, the fluid to be filtered is pressurised to a pressure of 2 bar. At this high pressure, the open end of the hollow fibres experiences the high pressure when the fluid enters the filtration channel, causing the pressure inside the fibres to rise above the pressure in the channel. The elastic fibres thus expand laterally to produce the filter matrix. Where solid fibres are used, the high pressure difference induced along the filter is sufficient to compress the elastic fibres to create a filter matrix.

The filtration channel inner surface is tapered along the length thereof such that the chamber is restricted in cross-section over at least a portion thereof. This shagging of the channel surface assists in creating the filter matrix whilst the fibres are under pressure when the filter is operating in filtration mode. In this manner, the tightness of packing of the pressurised fibres is gradually varying along the fibre to create a graduated level of filtration. Larger particles becomes trapped in the interstices between fibres that are less expanded, whilst smaller particles becomes trapped in the interstices between fibres that are more expanded. The means of pressurising the fluid to be filtered may be a pump.

In an embodiment, the inner surface cross-section of the filtration channel may taper gradually along the length thereof. In an alternative embodiment, the inner surface cross-section may taper gradually from the outlet end of the filter casing to a pinch point and gradually re-expand towards the inlet end of the casing. The cross-section may have two or more pinch points. The filtration channel may have a generally circular cross-section or it may have a substantially square rectangular cross-section.

The filter casing may comprise a moulded casing, cast into two parts for ease of manufacture. This construction also enables ease of installation of the fibres within the casing. The fibres may be secured in bundles and may be arranged on a rack inside the filtration channel. The filtration channel may include a recessed portion at the outlet end thereof, in which the fibres are secured. During installation of the filter, the rack or racks can be inserted into the recessed portion of the filtration channel, which is moulded in a first part of the casing. A second part of the casing may comprise a lid which can be secured over the filtration channel to complete the filter casing.

In an embodiment, the filter may include flushing means for flushing the filter in a direction from the outlet end to the inlet end - that is the filter is back flushed. The flushing means may include a vacuum generator that can be used to draw flush liquid out of the filtration channel during the flush mode of the filter.

The filter casing may be elongate and the filtration channel may be elongate. A plurality of racks of fibres can be inserted in series into the elongate filtration channel. This construction has the advantage of increasing the filtration capacity of the filter in a simple and effective manner. The filter may form part of a bank of filters arranged in a housing. The housing may include slots into which the filters are insertable. An advantage of this construction is that if the filter requires replacement, it can be easily removed from the slot in which it is housed and replaced with a new filter.

According to a second aspect of the invention, there is provided a method of operating a filter as set out in the claims.

The invention may be carried out in practice in a number of ways, and several specific embodiments will now be described by way of example, with reference to the accompanying drawings in which:
Figure 1(a) is a longitudinal section through a prior art filter;
Figure 1(b) is a longitudinal section through the filter of Figure 1 in filtration mode;
Figure 2(a) is a schematic perspective view of a filter in accordance with the present invention;
Figure 2(b) is a longitudinal section through a first embodiment of the present invention;
Figure 3(a) is a schematic view of a hollow fibre used in the filter of Figure 2(b);
Figure 3(b) is a schematic view of the fibre of Figure 3(a) during a filtration mode of the filter of Figure 2(b);
Figure 3(c) is a schematic of the fibre of Figure 3(a) during a flushing mode of the filter;
Figure 4 is a longitudinal section through a second embodiment of the filter;
Figure 5 (a) is a schematic of a solid fibre used in a second embodiment of the filter;
Figure 5(b) is a schematic of the solid fibre of Figure 5(a) during a filtration mode of the filter;
Figure 5(c) is a schematic of the solid fibre of Figure 5(a) during a flush mode of the filter;
Figure 6 is longitudinal section through the filter of Figure 2(a);
Figure 7 is a schematic perspective view of Figure 2(a);
Figure 8 is a longitudinal section through a further embodiment of the filter having a tapered filtration channel;
Figure 9 is longitudinal section through a still further embodiment of the filter having a parallel filtration channel which embodiment does not form part of the claimed invention;
Figure 10 is a longitudinal section through a filter according to the first embodiment of the invention, shown in filtration mode;
Figure 11 is longitudinal section through a filter according to the first embodiment of the invention, shown in flush mode;
Figure 12 is a schematic perspective of a bank of filters in accordance with the invention; and
Figure 13 is a schematic showing an embodiment of the control valves at the inlet end and outlet end of the filter.

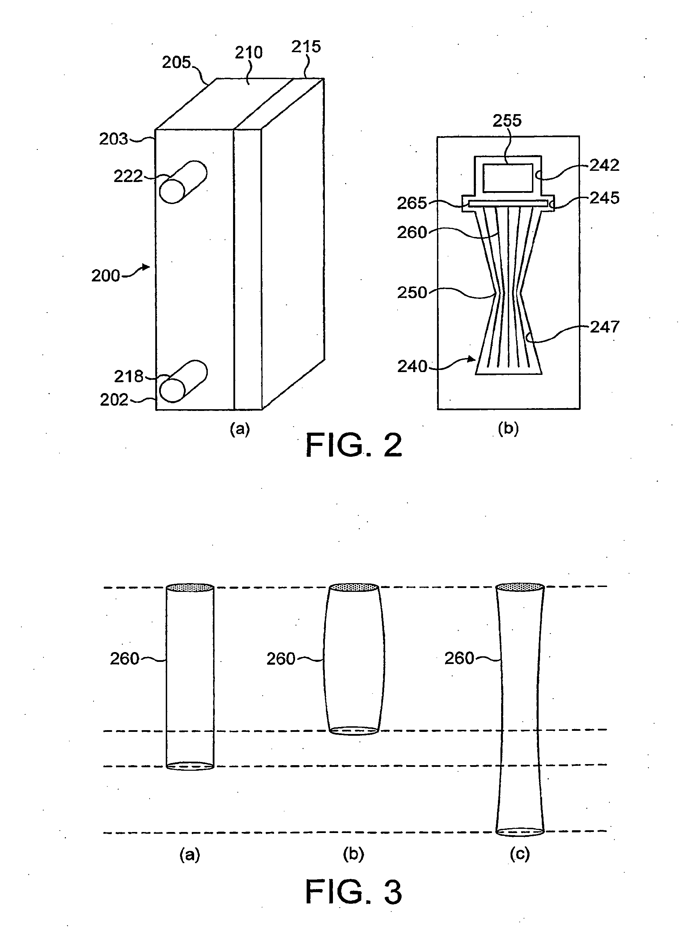

Turning firstly to Figure 2(a) there is shown a filter 200. The filter 200 is contained within a rectangular filter casing 210 the size of which may be selected according to the particular fluid pressure, flow rates or volumes required. The filter casing is preferably made of fibre glass or steel but can be made of another appropriate rigid material. The filter has an inlet end 202 and an outlet end 203 respectively, allowing the medium to be filtered to ingress into and egress from the filter. The filter casing 210 consists of a main first part 205 and a second smaller part 215 that provides a lid for the first part 205. In a specific embodiment the housing has a length of between 300mm and 500mm.

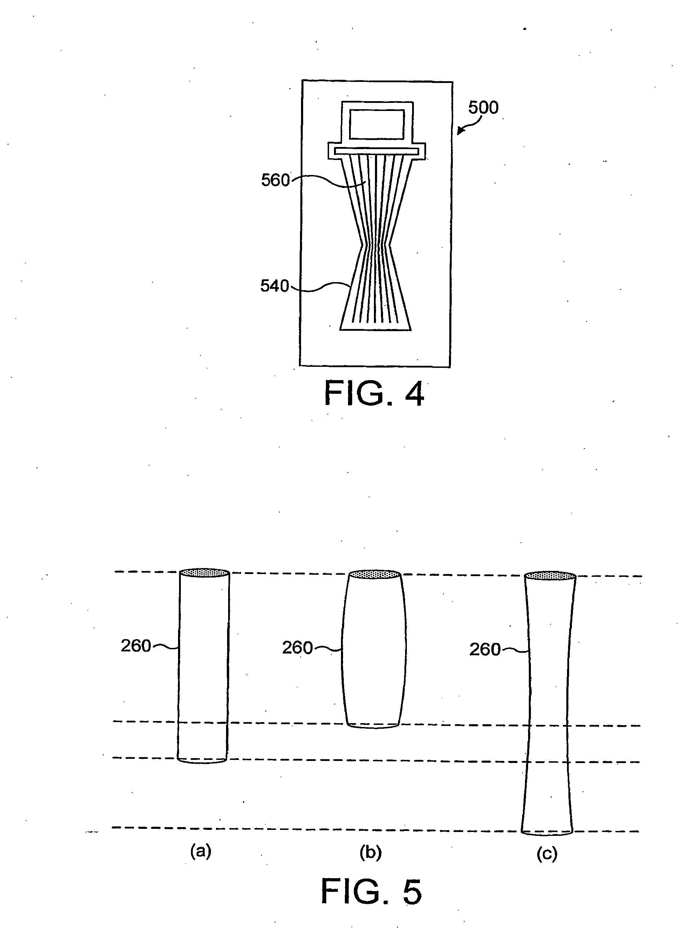

At the inlet end 202 an inlet port 218 provides fluid communication into the filter casing 210. At the outlet end 203 an outlet port 222 provides fluid communication from the filter casing 210 for a filter fluid to further pipes for downstream uses or processing (not shown). Further ports 224, 226 at the opposite face of the casing 210, are seen in Figure 5 and provide air conduits into and out of the filter casing respectively. Valves 230a, 230b, 230c and 230d are provided in each of the ports 218, 222, 224 and 226 respectively to control the flow rate through each port. A control unit 229 is used to control the valves 230, the operating pressure of the fluid to be filtered and other operational variables of the filter.

Figure 2(b) shows a longitudinal section of the filter 200, and shows a filtration channel 240 that is cut into the casing 210. The filtration channel 240 extends through the casing 210 and can take various forms as desired. In the present embodiment, the channel 240 includes a rectangular section 242 at the outlet end 203 of the casing 240. Moving towards the inlet end 202, the rectangular section 242 opens out into a shallow recessed portion 245 before the channel reverts briefly back to the width of the rectangular section 242. From here, the channel cross-section gradually narrows with a taper along the walls 247 to a pinch point 250. The channel cross-section is narrowest at the pinch point 250. Beyond the pinch point 250, the channel widens again towards the inlet end 202 at which the channel 240 terminates.

A storage chamber 255 is housed inside the rectangular section 242. The storage chamber 255 is used to store water or other flush liquid or detergents during the filtering mode of the filter.

A plurality of elastic fibres 260 hangs in the channel 240. The fibres are secured in bundles at the outlet end thereof to a rack 265. The rack 265 is housed in the recessed portion 245 of the channel 240. When the filter 200 is not in use, the fibres 260 hang tightly packed in the channel 240 such that they cannot move or can move very little. In this embodiment, the fibres 260 are hollow elastic fibres that are sealed at the outlet end thereof and open at the inlet end as shown in Figure 3(a). The fibres 260 need not be individually sealed if the manner of securing the fibres at the outlet end effectively provides a seal, such as melting the end together. The fibres 260 may be of any suitable dimension and material, depending upon application. In one example, the fibres may be of polymer or nylon. The fibres can also be made of metal, or they could be plant fibres or made of other natural or organic material. The fibres 260 used in the present embodiment have an overall diameter of 0.1mm and a length of approximately 300mm. The fibres may have a smooth or a rough surface and may if required be coated. Fibre coatings such as Teflon and zinc may be appropriate. They may also if desired be electrically charged. Charging the fibres will encourage ionisation, which may be important in some applications. Also it may be desired for the fluid, the fibres, areas within the housing or any combination of these to be magnetised.

The fibres 260 are flexible and elastic enough such that an increase in pressure inside the fibre will cause it to expand in a direction perpendicular to its length, as shown in Figure 3(b). The lateral expansion produces a corresponding shortening in the length of the fibre 260. If a negative pressure field is applied around the fibre, and a lower pressure is present inside the fibre that outside the fibre, then the fibre 260 tends to elongate in length and narrow in lateral dimension, as seen in Figure 3(c).

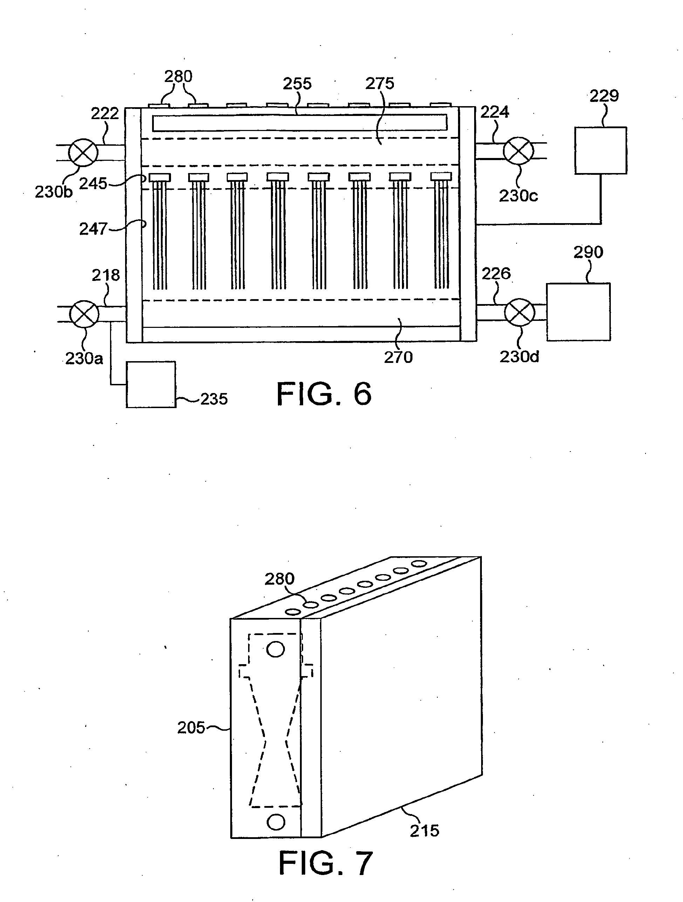

Referring now to Figure 6, the filter casing 210 and the filtration channel 240 may be deep enough to allow several racks of fibres 260 to be inserted into the recessed portion 245. The filter 200 seen in Figure 5 includes eight racks of fibres 260 arranged in series in the channel 240. At the inlet end 202, the casing 210 includes a single fluid inlet port 218 that supplies the fluid to be filtered into a common supply chamber 270 extending the length of the filter casing 210. The casing 210 includes a single outlet chamber 275 for the egress of filtered fluid from the channel 240 to the outlet port 222. A plurality of flush liquid supply ports 280 is arranged in the top face of the filter to enable a flush to be supplied to the storage chamber 255.

Air outlet port 226 is connected to a vacuum generator 290 for use in the flushing operation. A pump 235 supplies the required operating pressure to the fluid to be filtered.

The filter 200 is manufactured as follows. The first 205 and second 215 parts of the filter casing 210 are moulded from fibreglass or steel. The first part 205 of the casing 210 includes a major portion of the elongate filtration channel 240 which receives the fibre bundles. The racks of fibre bundles 260 are then inserted into the recessed portion 245 of the channel 240. The second part of the casing 210 consists of the lid 215 which may include contours of the channel 240 formed in an inner surface thereof, as seen in Figure 7, to complete the cross sectional contouring of the complete filtration channel 240. The lid 215 is sealed over the first part 205 using glue or other appropriate sealing means. The inlet ports 218, 224 and outlet ports 222, 226 are cast with threads for the fitting of the valves 230.

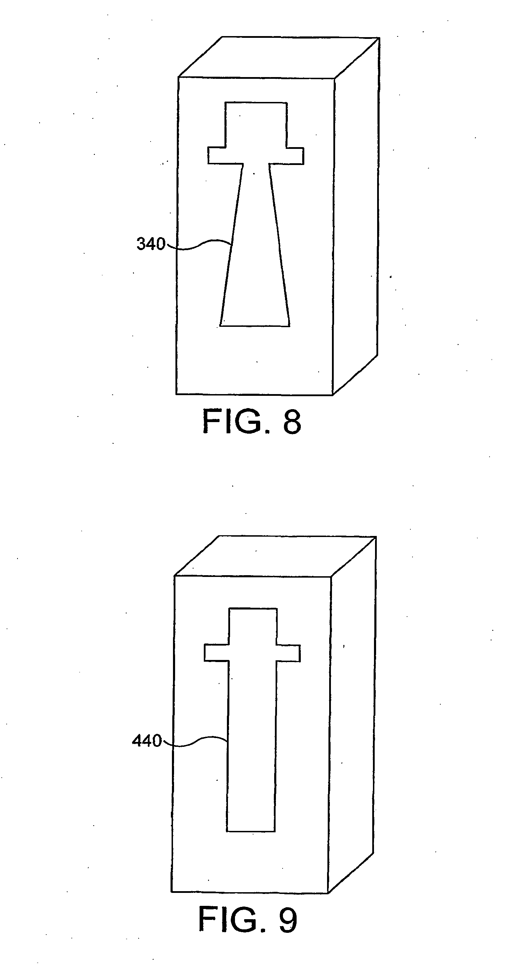

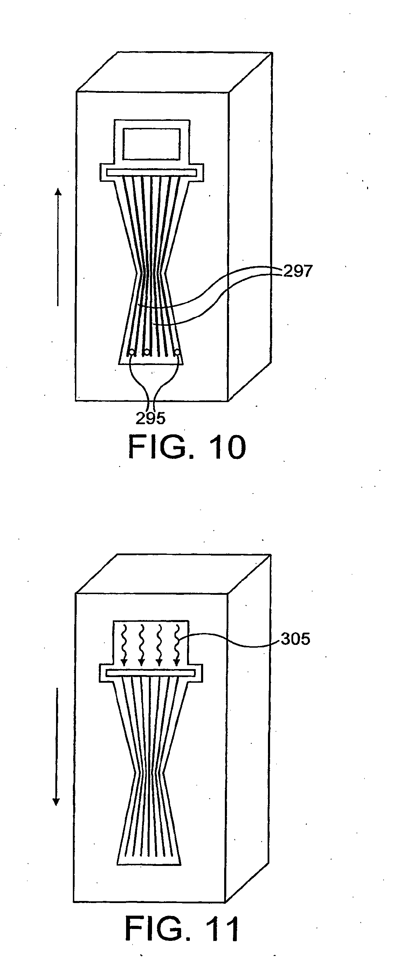

Operation of the filter is as follows. Fluid valves 230a and 230b are opened. The air valves 230c and 230d remain closed during this filtration mode. The fluid to be filtered enters the filter at high pressure at inlet ports 218. In the present embodiments, the fluid is pressured to 2 bar. Thus a pressure difference of Δ2 bar is produced along the filtration channel 240. At this pressure, the open end of the hollow fibres 260 and hence the whole inside of the fibres experiences the high pressure and the pressure inside of the fibres rises relative to the pressure outside the fibres. The fibres 260 thus expand in a direction perpendicular to their length, and their length correspondingly shortens. The expansion of the fibres causes them to tighten together even more closely inside the restricted cross-section area of the filtration channel 240. The fibres 260 are packed most tightly at the pinch point 250 as seen in Figure 10. The fluid to be filtered filters through the compacted fibres 260 in the direction of the arrow in Figure 9. Particles in the fluid become trapped in the interstices between the fibres. The larger particles 295 are trapped in the larger interstices and the smallest particles 297 are trapped close to the pinch point 250. Tests have indicated that particles of a size as small as 1 micron can be filtered using this filter.

Once the fluid to be filtered has passed through the filtration channel 240, the filtered fluid exits the filter via outlet port 222.

In an embodiment of the filter 500 shown in Figure 4, the fibres are elastic solid fibres 560 as seen in Figure 5(a). In this embodiment, the fibres 560 have a diameter of 0.3 mm, and are identical to the hollow fibres 260 in all other respects.

Operation of this embodiment of the filter 500 is identical to that of the first embodiment of the filter 200. The effect of the introduction of pressurised fluid into the filtration channel 540 is to compress the fibres 560, as shown in figure 5(b). As the fibres 560 are elastic, they tend to shorten in length and correspondingly to increase in diameter under the high pressure of the fluid. The increase in diameter of the fibres causes them to tighten together even more closely inside the filtration channel 540 to produce a filter matrix in the interstices between the fibres 560.

The solid fibre filter 500 is suitable for filtering out particles of down to a few microns in size.

The filter 200; 500 is flushed clean as follows. The flushing operation will be described with reference to the first embodiment of the filter 200, for reasons of clarity only, and applies mutatis mutandis to the second embodiment of the filter 500. The filter liquid valves 230a and 230b are closed. The air valves 230c and 230d are then opened simultaneously, introducing a pressure drop inside the filtration channel 240. At this pressure, the pressure inside the fibres 260 drops and becomes lower than the pressure outside of the fibres. Referring to Figure 11, the fibres elongate and hang more loosely outside the filtration channel, allowing trapped particles 295, 297 to fall from the fibres towards the inlet end. A flushing fluid 305, stored in the storage chamber 255 during the filtering operation, is then released into the filtration channel to rinse the particles 295, 297 from the fibres 260. The flushing liquid 305 exits the filter through port 226. to a further piping system (not shown). As there is no balloon to deflate as in the prior art, the flushing of the filter is quicker and therefore requires less flushing liquid 305.

In an embodiment of the filter, the flush method is enhanced by the vacuum generator 290 as shown in Figure 6, which includes a small motor (not shown) that is capable of slowly "building up" a vacuum over a period of 10 minutes or so during the filtration mode of the filter. In flush mode, the vacuum generator pulls the flushing liquid out of the filtration channel 240 very quickly. The enhanced flush method described above leaves the particles 295, 297, known as "filter cake" in a drier condition containing a larger percentage of particles, which advantageously requires less downstream processing by the customer.

If it is required, steam can be passed through the filtration channel 240 in order to sterilise the channel 240 and fibres 260.

It will be apparent to the skilled man that the filter can be flushed from either end of the filter depending on the specific construction of the filter.

It will be apparent to the skilled man that the filter of the present invention has several advantages over the prior art filter, including the much reduced likelihood of the fibres becoming tangled because they are packed so tightly and are not free to move inside the filtration channel. The filter casing 210 includes no moving parts and thus shorter fibre bundles can be used in the absence of a balloon/membrane. The net result is that the filter 200 is significantly cheaper to build and to operate than is the prior art filter 100. Furthermore, the filter has the additional advantage of being able to deliver filtered fluid at a high pressure to a downstream utility. Very often prior art filters cannot operate with a back pressure at the filter outlet, meaning that in order to function properly, the filter outlet pressure must be atmospheric pressure. However, the end use of the filtered fluid may require the fluid to pressurised, for example to mains pressure for use in a washing machine or dishwasher or for being transported through further pipework in an industrial plant.

The prior art filter thus requires an additional pump downstream of the filter in order to supply pressurised filtered fluid to the end user. The additional pump is an extra cost to the customer and also requires additional maintenance and servicing. These disadvantages are removed in the filter of the present application, as the filtered fluid may already be pressurised as it exits the filter without impairing the performance of the filter.

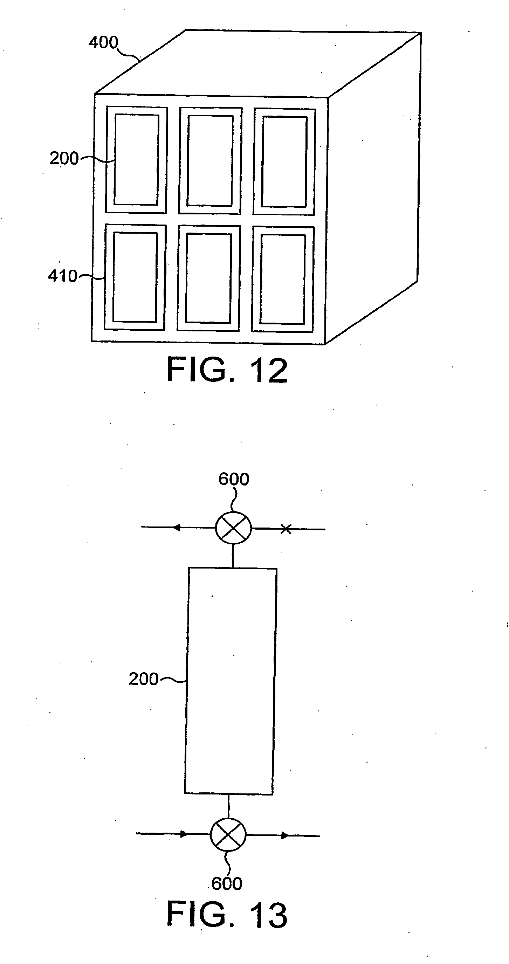

In a further embodiment, a plurality of filters 200 are arranged in banks in a housing 400, see Figure 12. The housing includes slots 410 into which the filters are inserted.

The filtration channel may have alternative forms, examples of which are seen in Figures 8 and 9. In Figure 8, the filtration channel 340 includes tapered walls that taper inwardly in the direction of filtration, with no mid-way pinch point. In Figure 9, which does not form part of the claimed invention, the walls of the channel 440 are parallel to each other along the length of the channel. It will be apparent that other forms of channel, including one having a rounded cross-section, can be used if desired.

Other variables that can be altered as desired include the diameter and length of the fibres, the dimensions of the casing; the method of manufacture and materials of the casing; the operating pressure, temperature; the manner in which the fibres are anchored. In certain applications, if the fibres are packed tightly enough and the ends of the filtration channel are sealed then the fibres need not be anchored at all. Further variables include flushing materials, volumes and pressures. The filter of the present invention may be scaled in size as desired according to the volumes to be filtered and/or the application in hand. In an embodiment the control valves at the inlet end and outlet end of the filter may be diverter valves such as ball valves as shown in Figure 13.

Although the filter is shown with its longitudinal axis vertical in the drawings, it will be understood that in some applications the axis may be horizontal.

There are a large number of specific applications which may benefit from the use of a filter according to the present invention. Typical applications might include:
- Filtration for reverse osmosis, including for sand, petrol/gas and electrical power plants.
- The removal of cement, grit, sand, silica and so on following an industrial process such as precast concrete.
- Separation of coagulated products.
- Separation of biological tissue.
- Separation of coagulated blood and the like.
- Separation of vegetable matter, for example the waste water from olive oil production or tomato waste.
- Reducing the turbidity of water generally, where require for technical or for legal reasons.
- The removal of silt from a liquid/water.
- Ballast water.
- Removal of chemicals.

## Claims

1. A fluid filter (200) comprising a filter casing (210) having an inlet end (202) at which a fluid to be filtered is introducible, an outlet end (203) and a filtration channel (240; 340); **characterised in that**
a plurality of fibres (260) extending longitudinally inside the channel, the fibres comprising hollow elastic fibres which are sealed at the outlet end and are open to pressure at the inlet end, the fibres being expandable in a direction perpendicular to their length in response to an increase in pressure at the input end;
the channel has a cross section that gradually narrows with a taper to a pinch point (250) intermediate the inlet end and the outlet end; and
further **characterised in that** the fibres are closely packed and are not free to move in the channel, and **in that** in response to an increase in pressure at the input end the fibres expand and tighten together more closely within the pinch point to produce a filter matrix of the interstices between the fibres.

2. A filter (200; 500) as claimed in Claim 1, further comprising a means (235) of pressurising the fluid to be filtered.

3. A filter (200; 500) as claimed in Claim 2 in which the means (235) is a pump.

4. A filter (200; 500) as claimed in Claim 2 or Claim 3 in which the fluid is pressurised to a pressure of approximately 2 bar during a filtration mode of the filter.

5. A filter (200; 500) as claimed in Claim 1 in which the filtration channel (240; 540) cross section tapers gradually from the outlet end (203) to the pinch point (250) and gradually re-expands towards the inlet end (202).

6. A filter as claimed in claim 5 in which the filtration channel includes two or more pinch points (250).

7. A filter (200; 500) as claimed in any one of the preceding claims in which the filter casing comprises a moulded casing having first (205) and second (215) parts, in which the first part comprises the filtration channel, and the second part comprises a lid for covering the channel of the first part.

8. A filter (200; 500) as claimed in any one of the preceding claims in which the fibres (260; 560) are secured in bundles at the outlet end (203) and in which the bundles are arranged on a rack inside the filtration channel (240; 340; 440; 540).

9. A filter (200; 500) as claimed in any one of the preceding claims in which the filtration channel (240; 340; 440; 540) includes a recessed portion (245) at the outlet end at which the fibres are secured.

10. A filter (200; 500) as claimed in any one of the preceding claims, further comprising a control valve (230a, 230b, 230c) for controlling the supply of fluid to be filtered into the filter.

11. A filter (200; 500) as claimed in any one of the preceding claims in which the filter casing (210) includes a flush liquid storage chamber (255) at the outlet end (203).

12. A filter (200; 500) as claimed in any one of the preceding claims including flushing means (290) for flushing the filter in a direction from the outlet end (203) to the inlet end (202), and preferably in which the flushing means includes a vacuum generator.

13. A method of operating a filter (200) comprising a filter casing (210) having an inlet end (202) at which a fluid to be filtered is introducible, an outlet end (203) and a filtration channel (240; 340); the filter further including a plurality of fibres (260) extending longitudinally inside the channel,
the method being **characterized in that** the fibres comprise hollow elastic fibres which are sealed at the outlet end and are open to pressure at the inlet end, the fibres being expandable in a direction perpendicular to their length in response to an increase in pressure at the input end;
the method being further **characterised by** being applied to a filter having a cross section that gradually narrows with a taper to a pinch point (250) intermediate the inlet end and the outlet end; and
the method being further **characterised in that** the fibres are closely packed and are not free to move in the channel, and **in that** in response to an increase in pressure at the input end the fibres expand and tighten together more closely within the pinch point to produce a filter matrix of the interstices between the fibres.

14. A method as claimed in claim 13 in which the fluid is pressurised to a pressure of 2 bar.

15. A method as claimed in any one of Claims 13 to 14, including the step of flushing the filter by closing off the supply of pressurised fluid into the filter and passing a flushing fluid from the first end (202) to the second end (203).

16. A method as claimed in any one of Claims 13 to 15 including the step of passing steam and/or a cleaning chemical through the filtration channel (240; 340; 540) to clean the fibres (200; 500).

17. A method as claimed in any one of Claims 13 to 16 in which a vacuum generator (290) is provided at the second end (203), and wherein the step of flushing further comprises operating the vacuum generator to draw the flushing liquid out of the filtration channel (240; 340; 540).

## Patentansprüche

1. Fluidfilter (200), der ein Filtergehäuse (210) enthält, das ein Einlassende (202), an dem ein zu filterndes Fluid einführbar ist, ein Auslassende (203) und einen Filtrationskanal (240; 340) aufweist; **dadurch gekennzeichnet, dass**
sich mehrere Fasern (260) innerhalb des Kanals in Längsrichtung erstrecken, wobei die Fasern hohle, elastische Fasern enthalten, die an dem Auslassende abgedichtet sind und an dem Einlassende für Druck geöffnet sind, wobei die Fasern als Reaktion auf einen Druckanstieg an dem Einlassende in einer Richtung, die senkrecht zu ihrer Länge ist, streckbar sind;
der Kanal einen Querschnitt aufweist, der sich mit einer Verjüngung stufenweise bis zu einem Quetschpunkt (250), der in der Mitte zwischen dem Einlassende und dem Auslassende liegt, verengt; und
ferner **dadurch gekennzeichnet, dass** die Fasern dicht gepackt sind und nicht frei sind, um sich in dem Kanal zu bewegen, und dass sich die Fasern als Reaktion auf einen Druckanstieg an dem Einlassende ausdehnen und sich innerhalb des Quetschpunktes enger zusammenziehen, um eine Filtermatrix der Zwischenräume zwischen den Fasern herzustellen.

2. Filter (200; 500) nach Anspruch 1, der ferner Mittel (235) enthält, um das Fluid, das gefiltert werden soll, unter Druck zu setzen.

3. Filter (200; 500) nach Anspruch 2, wobei das Mittel (235) eine Pumpe ist.

4. Filter (200; 500) nach Anspruch 2 oder 3, wobei das Fluid während eines Filtrationsmodus des Filters unter einen Druck von etwa 2 bar gesetzt wird.

5. Filter (200; 500) nach Anspruch 1, wobei sich der Querschnitt des Filtrationskanals (240; 540) von dem Auslassende (203) zu dem Quetschpunkt (250) verjüngt und sich stufenweise bis zu dem Einlassende (202) wieder erweitert.

6. Filter) nach Anspruch 5, wobei der Filtrationskanal zwei oder mehrere Quetschpunkte (250) enthält.

7. Filter (200; 500) nach einem der vorhergehenden Ansprüche, wobei das Filtergehäuse ein geformtes Gehäuse mit einem ersten (205) und einem zweiten (215) Teil enthält, wobei der erste Teil den Filtrationskanal enthält und der zweite Teil einen Deckel zum Abdecken des Kanals des ersten Teils enthält.

8. Filter (200; 500) nach einem der vorhergehenden Ansprüche, wobei die Fasern (260; 560) an dem Auslassende (203) in Bündeln befestigt sind und wobei die Bündel auf einem Gestell innerhalb des Filtrationskanals (240; 340; 440; 540) angeordnet sind.

9. Filter (200; 500) nach einem der vorhergehenden Ansprüche, wobei der Filtrationskanal (240; 340; 440; 540) einen ausgesparten Abschnitt (245) an dem Auslassende, an dem die Fasern befestigt sind, enthält.

10. Filter (200; 500) nach einem der vorhergehenden Ansprüche, der ferner ein Steuerventil (230a, 230b, 230c) zum Steuern der Zufuhr des zu filternden Fluids in den Filter enthält.

11. Filter (200; 500) nach einem der vorhergehenden Ansprüche, wobei das Filtergehäuse (210) an dem Auslassende (203) eine Speicherkammer (255) für eine Spülflüssigkeit enthält.

12. Filter (200; 500) nach einem der vorhergehenden Ansprüche, der Spülmittel (290) enthält, um den Filter in einer Richtung von dem Auslassende (203) bis zu dem Einlassende (202) zu spülen, und bei dem die Spülmittel vorzugsweise einen Vakuumerzeuger enthalten.

13. Verfahren zum Betreiben eines Filters (200), der ein Filtergehäuse (210) enthält, das ein Einlassende (202), an dem ein zu filterndes Fluid einführbar ist, ein Auslassende (203) und einen Filtrationskanal (240; 340) aufweist; der Filter enthält ferner mehrere Fasern (260), die sich innerhalb des Kanals in Längsrichtung erstrecken, wobei das Verfahren **dadurch gekennzeichnet ist, dass** die Fasern hohle, elastische Fasern enthalten, die an dem Auslassende abgedichtet sind und an dem Einlassende für Druck geöffnet sind, wobei die Fasern als Reaktion auf einen Druckanstieg an dem Einlassende in einer Richtung, die senkrecht zu ihrer Länge ist, streckbar sind;
wobei das Verfahren ferner **dadurch gekennzeichnet ist, dass** es auf einen Filter angewandt wird, der einen Querschnitt aufweist, der sich mit einer Verjüngung stufenweise bis zu einem Quetschpunkt (250), der in der Mitte zwischen dem Einlassende und dem Auslassende liegt, verengt; und
wobei das Verfahren ferner **dadurch gekennzeichnet ist, dass** die Fasern dicht gepackt sind und nicht frei sind, um sich in dem Kanal zu bewegen, und dass sich die Fasern als Reaktion auf einen Druckanstieg an dem Einlassende ausdehnen und sich innerhalb des Quetschpunktes enger zusammenziehen, um eine Filtermatrix der Zwischenräume zwischen den Fasern herzustellen.

14. Verfahren nach Anspruch 13, wobei das Fluid unter einen Druck von etwa 2 bar gesetzt wird.

15. Verfahren nach Anspruch 13 oder 14, das den Schritt des Spülens des Filters enthält, indem die Zufuhr des unter Druck stehenden Fluids in den Filter geschlossen wird und indem sich ein Spülfluid von dem ersten Ende (202) zu dem zweiten Ende (203) hindurchbewegt.

16. Verfahren nach einem der Ansprüche 13 bis 15, das den Schritt des Hindurchtretens von Dampf und/oder des Durchführens einer chemischen Reinigung durch den Filtrationskanal (240; 340; 540) enthält, um die Fasern (200; 500) zu reinigen.

17. Verfahren nach einem der Ansprüche 13 bis 16, wobei ein Vakuumerzeuger (290) an dem zweiten Ende (203) vorgesehen ist, und wobei der Schritt des Spülens ferner ein Betreiben des Vakuumerzeugers enthält, um die Spülflüssigkeit aus dem Filtrationskanal (240; 340; 540) abzusaugen.

## Revendications

1. Filtre à fluide (200) comprenant un boîtier de filtre (210) possédant une extrémité d'entrée (202) à laquelle un fluide à filtrer peut être introduit, une extrémité de refoulement (203) et un canal de filtration (240 ; 340) ; **caractérisé en ce que**
une pluralité de fibres (260) s'étend longitudinalement à l'intérieur du canal, les fibres comprenant des fibres élastiques creuses qui sont scellées au niveau de l'extrémité de refoulement et sont ouvertes à la pression au niveau de l'extrémité d'entrée, les fibres étant extensibles dans une direction perpendiculaire à leur longueur en réponse à une augmentation de pression au niveau de l'extrémité d'entrée ;
le canal possède une coupe transversale qui se rétrécit progressivement avec un effilement à un point de pincement (250) entre l'extrémité d'entrée et l'extrémité de refoulement ; et
**caractérisé en outre en ce que** les fibres sont étroitement tassées et ne sont pas libres de se déplacer dans le canal, et **en ce qu'**en réponse à une augmentation de pression au niveau de l'extrémité d'entrée, les fibres se dilatent et se resserrent plus étroitement les unes par rapport aux autres au sein du point de pincement pour produire une matrice filtrante des interstices entre les fibres.

2. Filtre (200 ; 500) selon la revendication 1, comprenant en outre un moyen (235) de mise sous pression du fluide à filtrer.

3. Filtre (200 ; 500) selon la revendication 2, dans lequel le moyen (235) est une pompe.

4. Filtre (200 ; 500) selon la revendication 2 ou la revendication 3, dans lequel le fluide est mis sous pression à une pression d'approximativement 2 bar durant un mode de filtration du filtre.

5. Filtre (200 ; 500) selon la revendication 1, dans lequel la coupe transversale du canal de filtration (240 ; 540) s'effile progressivement de l'extrémité de refoulement (203) au point de pincement (250) et s'agrandit de nouveau progressivement en direction de l'extrémité d'entrée (202).

6. Filtre selon la revendication 5, dans lequel le canal de filtration comprend deux points de pincement (250) ou plus.

7. Filtre (200 ; 500) selon l'une quelconque des revendications précédentes, dans lequel le boîtier de filtre comprend un boîtier moulé possédant des première (205) et seconde (215) parties, dans lequel la première partie comprend le canal de filtration, et la seconde partie comprend un couvercle pour couvrir le canal de la première partie.

8. Filtre (200 ; 500) selon l'une quelconque des revendications précédentes, dans lequel les fibres (260 ; 560) sont fixées en paquets au niveau de l'extrémité de refoulement (203) et dans lequel les paquets sont disposés sur un support à l'intérieur du canal de filtration (240 ; 340 ; 440 ; 540).

9. Filtre (200 ; 500) selon l'une quelconque des revendications précédentes, dans lequel le canal de filtration (240 ; 340 ; 440 ; 540) comprend une partie évidée (245) au niveau de l'extrémité de refoulement à laquelle les fibres sont fixées.

10. Filtre (200 ; 500) selon l'une quelconque des revendications précédentes, comprenant en outre une soupape de commande (230a, 230b, 230c) pour commander l'alimentation de fluide à filtrer dans le filtre.

11. Filtre (200 ; 500) selon l'une quelconque des revendications précédentes, dans lequel le boîtier de filtre (210) comprend une chambre de stockage de liquide de rinçage (255) au niveau de l'extrémité de refoulement (203).

12. Filtre (200 ; 500) selon l'une quelconque des revendications précédentes comprenant un moyen de rinçage (290) pour rincer le filtre dans une direction allant de l'extrémité de refoulement (203) à l'extrémité d'entrée (202), et de préférence dans lequel le moyen de rinçage comprend un générateur de vide.

13. Procédé d'exploitation d'un filtre (200) comprenant un boîtier de filtre (210) possédant une extrémité d'entrée (202) à laquelle un fluide à filtrer peut être introduit, une extrémité de refoulement (203) et un canal de filtration (240 ; 340) ; le filtre comprenant en outre une pluralité de fibres (260) s'étendant longitudinalement à l'intérieur du canal, le procédé étant **caractérisé en ce que** les fibres comprennent des fibres élastiques creuses qui sont scellées au niveau de l'extrémité de refoulement et sont ouvertes à la pression au niveau de l'extrémité d'entrée, les fibres étant extensibles dans une direction perpendiculaire à leur longueur en réponse à une augmentation de pression au niveau de l'extrémité d'entrée ;
le procédé étant **caractérisé en outre en ce qu'**il est appliqué à un filtre possédant une coupe transversale qui se rétrécit progressivement avec un effilement à un point de pincement (250) entre l'extrémité d'entrée et l'extrémité de refoulement ; et
le procédé étant **caractérisé en outre en ce que** les fibres sont étroitement tassées et ne sont pas libres de se déplacer dans le canal, et **en ce qu'**en réponse à une augmentation de pression au niveau de l'extrémité d'entrée, les fibres se dilatent et se resserrent plus étroitement les unes par rapport aux autres au sein du point de pincement pour produire une matrice filtrante des interstices entre les fibres.

14. Procédé selon la revendication 13, dans lequel le fluide est mis sous pression à une pression de 2 bar.

15. Procédé selon l'une quelconque des revendications 13 à 14, comprenant l'étape de rinçage du filtre en coupant l'alimentation de fluide sous pression dans le filtre et en faisant passer un fluide de rinçage de la première extrémité (202) à la seconde extrémité (203).

16. Procédé selon l'une quelconque des revendications 13 à 15, comprenant l'étape consistant à faire passer de la vapeur et/ou une substance chimique de nettoyage à travers le canal de filtration (240 ; 340 ; 540) pour nettoyer les fibres (200 ; 500).

17. Procédé selon l'une quelconque des revendications 13 à 16, dans lequel un générateur de vide (290) est fourni au niveau de la seconde extrémité (203), et dans lequel l'étape consistant à rincer comprend en outre la mise en oeuvre du générateur de vide pour aspirer le liquide de rinçage hors du canal de filtration (240 ; 340 ; 540).
